**Europäisches Patentamt**

**European Patent Office**

**Office européen des brevets**

(19)

(11)　**EP 1 370 933 B1**

(12)　**EUROPÄISCHE PATENTSCHRIFT**

(45) Veröffentlichungstag und Bekanntmachung des Hinweises auf die Patenterteilung:
**13.07.2005　Patentblatt 2005/28**

(51) Int Cl.[7]: **G06F 7/72**

(21) Anmeldenummer: 02712852.9

(22) Anmeldetag: **24.01.2002**

(86) Internationale Anmeldenummer:
**PCT/EP2002/000734**

(87) Internationale Veröffentlichungsnummer:
**WO 2002/073394 (19.09.2002 Gazette 2002/38)**

(54) **VERFAHREN UND VORRICHTUNG ZUM MODULAREN MULTIPLIZIEREN**

METHOD AND DEVICE FOR MODULAR MULTIPLICATION

PROCEDE ET DISPOSITIF DE MULTIPLICATION MODULAIRE

(84) Benannte Vertragsstaaten:
**AT DE ES FR GB IT**

(30) Priorität: **13.03.2001　DE 10111987**

(43) Veröffentlichungstag der Anmeldung:
**17.12.2003　Patentblatt 2003/51**

(73) Patentinhaber: **Infineon Technologies AG
81669 München (DE)**

(72) Erfinder:
* **ELBE, Astrid
81243 München (DE)**
* **SEDLAK, Holger
82054 Sauerlach (DE)**
* **JANSSEN, Norbert
81667 München (DE)**
* **SEIFERT, Jean-Pierre
81669 München (DE)**

(74) Vertreter: **Zinkler, Franz, Dipl.-Ing. et al
Schoppe, Zimmermann, Stöckeler & Zinkler
Postfach 246
82043 Pullach bei München (DE)**

(56) Entgegenhaltungen:
**WO-A-99/14880　　　　DE-A- 3 631 992**

* **WALTER C D: "FASTER MODULAR MULTIPLICATION BY OPERAND SCALING" ADVANCES IN CRYPTOLOGY. SANTA BARBARA, AUG. 11 - 15, 1991, PROCEEDINGS OF THE CONFERENCE ON THEORY AND APPLICATIONS OF CRYPTOGRAPHIC TECHNIQUES (CRYPTO), BERLIN, SPRINGER, DE, 1991, Seiten 313-323, XP000269037**
* **WALTER C D: "SPACE/TIME TRADE-OFFS FOR HIGHER RADIX MODULAR MULTIPLICATION USING REPEATED ADDITION" IEEE TRANSACTIONS ON COMPUTERS, IEEE INC. NEW YORK, US, Bd. 46, Nr. 2, 1. Februar 1997 (1997-02-01), Seiten 139-141, XP000642786 ISSN: 0018-9340**

**EP 1 370 933 B1**

**Beschreibung**

Die vorliegende Erfindung bezieht sich auf Kryptographiealgorithmen und Vorrichtungen zum Ausführen solcher Kryptographiealgorithmen und insbesondere auf ein Verfahren und eine Vorrichtung zum modularen Multiplizieren unter Verwendung eines Multiplikations-Vorausschau-Verfahrens und eines Reduktions-Vorausschau-Verfahrens.

Die Kryptographie ist eine der wesentlichen Anwendungen für die modulare Arithmetik. Ein wesentlicher Algorithmus für die Kryptographie ist der bekannte RSA-Algorithmus. Der RSA-Algorithmus baut auf einer modularen Exponentiation auf, welche folgendermaßen dargestellt werden kann:

$$C = M^d \bmod (N).$$

Hierbei ist C eine verschlüsselte Nachricht, M ist eine nicht-verschlüsselte Nachricht, d ist der geheime Schlüssel und N ist der Modul. Der Modul N wird üblicherweise durch Multiplikation zweier Primzahlen p und q erzeugt. Die modulare Exponentiation wird mittels des bekannten Square-and-Multiply-Algorithmus in Multiplikationen zerlegt. Hierzu wird der Exponent d in Zweierpotenzen zerlegt, so daß die modulare Exponentiation in mehrere modulare Multiplikationen zerlegt werden kann. Um die modulare Exponentiation rechenmäßig effizient implementieren zu können, wird die modulare Exponentiation daher in modulare Multiplikationen zerlegt, welche dann in modulare Additionen zerlegt werden können.

Die DE 3631992 C2 offenbart ein Kryptographie-Verfahren, bei dem die modulare Multiplikation unter Verwendung eines Multiplikations-Vorausschau-Verfahrens und unter Verwendung eines Reduktions-Vorausschau-Verfahrens beschleunigt werden kann. Das in der DE 3631992 C2 beschriebene Verfahren wird auch als ZDN-Verfahren bezeichnet und anhand von Fig. 9 näher beschrieben. Nach einem Startschritt 900 des Algorithmus werden die globalen Variablen M, C und N initialisiert. Ziel ist es, folgende modulare Multiplikation zu berechnen:

$$Z = M * C \bmod N.$$

M wird als der Multiplikator bezeichnet, während C als der Multiplikand bezeichnet wird. Z ist das Ergebnis der modularen Multiplikation, während N der Modul ist.

Hierauf werden verschiedene lokale Variablen initialisiert, auf die zunächst nicht näher eingegangen werden braucht. Anschließend werden zwei Vorausschau-Verfahren angewandt. Im Multiplikations-Vorausschau-Verfahren GEN_MULT_LA wird unter Verwendung verschiedener Look-Ahead-Regeln ein Multiplikations-Verschiebungswert $s_z$ sowie ein Multiplikations-Vorausschau-Parameter a berechnet (910). Hierauf wird der gegenwärtige Inhalt des Z-Registers einer Links-Verschiebungs-Operation um $s_z$-Stellen unterzogen (920).

Im wesentlichen parallel dazu wird ein Reduktions-Vorausschau-Verfahren GEN_Mod_LA (930) durchgeführt, um einen Reduktionsverschiebungswert $S_N$ und einen Reduktions-Parameter b zu berechnen. In einem Schritt 940 wird dann der gegenwärtige Inhalt des Modul-Registers, also N, um $s_N$ Stellen nach links bzw. rechts verschoben, um einen verschobenen Modulwert N' zu erzeugen. Die zentrale Drei-Operanden-Operation des ZDN-Verfahrens findet in einem Schritt 950 statt. Hierbei wird das Zwischenergebnis Z' nach dem Schritt 920 zu dem Multiplikanden C, der mit dem Multiplikations-Vorausschau-Parameter a multipliziert ist, und zu dem verschobenen Modul N', der mit dem Reduktions-Vorausschau-Parameter b multipliziert ist, addiert. Je nach aktueller Situation können die Vorausschau-Parameter a und b einen Wert von +1, 0 oder -1 haben.

Ein typischer Fall besteht darin, daß der Multiplikations-Vorausschau-Parameter a +1 beträgt, und daß der Reduktion-Vorausschau-Parameter b -1 beträgt, so daß zu einem verschobenen Zwischenergebnis Z' der Multiplikand C hinzu addiert wird, und der verschobene Modul N' davon subtrahiert wird. a wird einen Wert gleich 0 haben, wenn das Multiplikations-Vorausschau-Verfahren mehr als eine voreingestellte Anzahl von einzelnen Links-Verschiebungen zulassen würde, also wenn $s_Z$ größer als der maximal zulässige Wert von $s_Z$ ist, der auch als k bezeichnet wird. Für den Fall, daß a gleich 0 ist, und daß Z' aufgrund der vorausgehenden modularen Reduktion, also der vorausgehenden Subtraktion des verschobenen Moduls noch ziemlich klein ist, und insbesondere kleiner als der verschobene Modul N' ist, muß keine Reduktion stattfinden, so daß der Parameter b gleich 0 ist.

Die Schritte 910 bis 950 werden so lange durchgeführt, bis sämtliche Stellen des Multiplikanden abgearbeitet sind, also bis m gleich 0 ist, und bis auch ein Parameter n gleich 0 ist, welcher angibt, ob der verschobene Modul N' noch größer als der ursprüngliche Modul N ist, oder ob trotz der Tatsache, daß bereits sämtliche Stellen des Multiplikanden abgearbeitet sind, noch weitere Reduktionsschritte durch Subtrahieren des Moduls von Z durchgeführt werden müssen.

Abschließend wird noch bestimmt, ob Z kleiner als 0 ist. Falls dies der Fall ist, muß, um eine abschließende Reduktion zu erreichen, der Modul N zu Z hinzuaddiert werden, damit schließlich das korrekte Ergebnis Z der modularen Multiplikation erhalten wird. In einem Schritt 960 ist die modulare Multiplikation mittels des ZDN-Verfahrens beendet.

Der Multiplikations-Verschiebungswert $s_Z$ sowie der Multiplikations-Parameter a, welche im Schritt 910 durch den Multiplikations-Vorausschau-Algorithmus berechnet werden, ergeben sich durch die Topologie des Multiplikators sowie durch die eingesetzten Vorausschau-Regeln, die in der DE 3631992 C2 beschrieben sind.

Der Reduktions-Verschiebungswert $s_N$ und der Reduktions-Parameter b werden, wie es ebenfalls in der DE 3631992 C2 beschrieben ist, durch Vergleich des gegenwärtigen Inhalts des Z-Registers mit einem Wert 2/3 mal N bestimmt. Aufgrund dieses Vergleiches trägt das ZDN-Verfahren seinen Namen (ZDN = Zwei Drittel N).

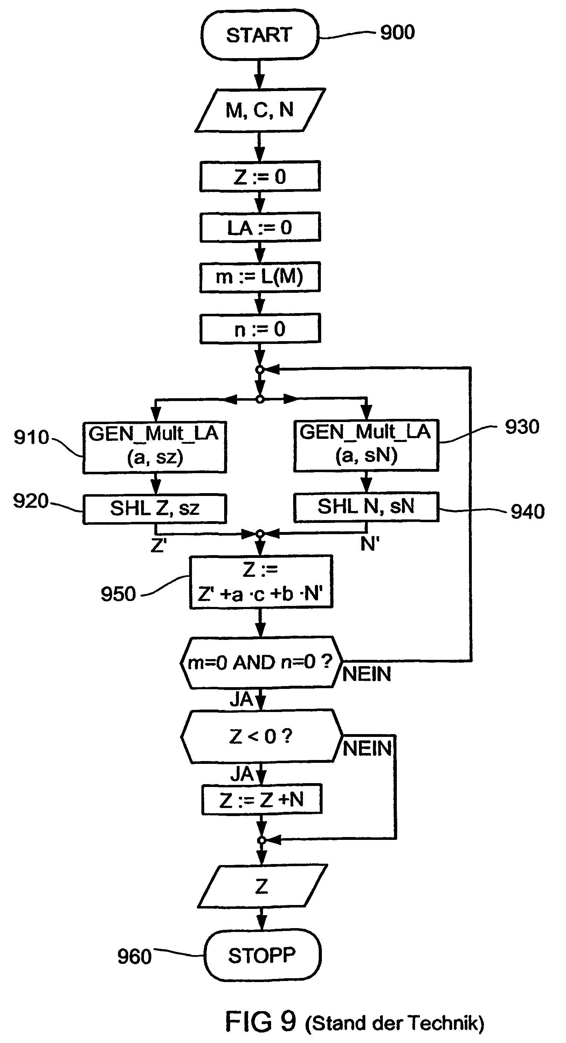

Das ZDN-Verfahren, wie es in Fig. 9 dargestellt ist, führt die modulare Multiplikation auf eine Drei-Operanden-Addition (Block 950 in Fig. 9) zurück, wobei zur Steigerung der Rechenzeiteffizienz das Multiplikations-Vorausschau-Verfahren und damit einhergehend das Reduktions-Vorausschau-Verfahren eingesetzt werden. Im Vergleich zur Montgomery-Reduktion für kann daher ein Rechenzeitvorteil erreicht werden.

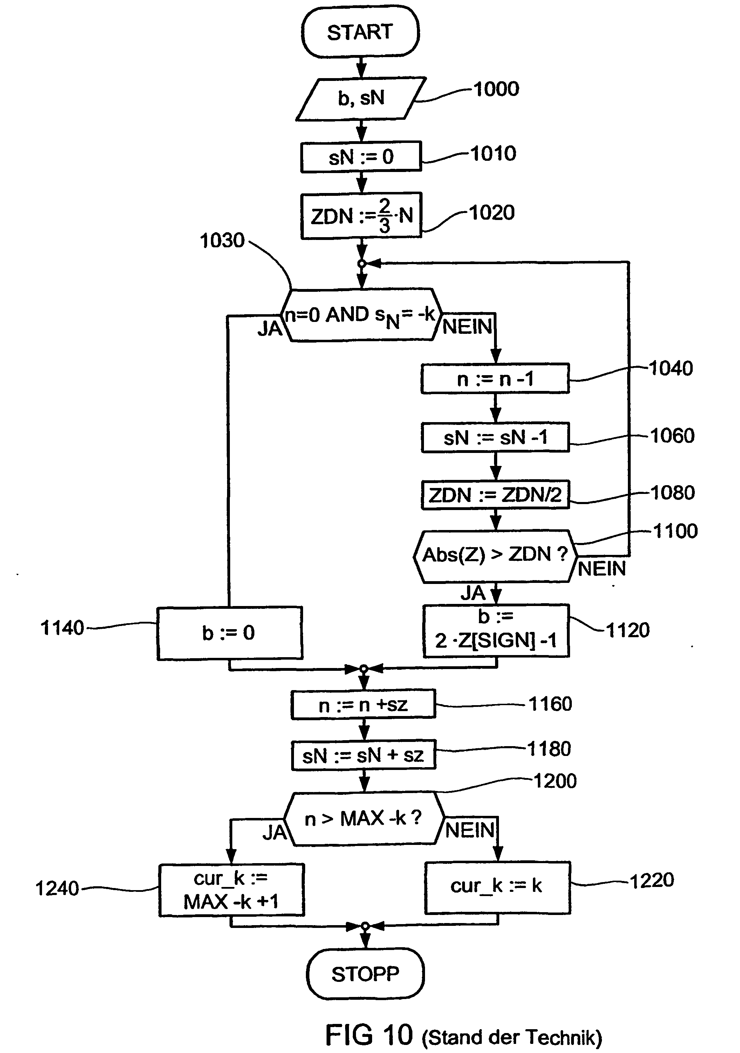

Im nachfolgenden wird anhand von Fig. 10 näher auf das Reduktions-Vorausschau-Verfahren eingegangen, das im Block 930 von Fig. 9 ausgeführt wird. Zunächst wird in einem Block 1000 eine Reservierung für die lokalen Variablen, d. h. den Reduktions-Vorausschau-Parameter b und den Reduktions-Verschiebungswert $s_N$, durchgeführt. In einem Block 1010 wird der Reduktions-Verschiebungswert $s_N$ auf Null initialisiert. Hierauf wird in einem Block 1020 der Wert ZDN berechnet, der gleich 2/3 des Moduls N ist. Dieser Wert, der im Block 1020 bestimmt wird, wird in einem eigenen Register, dem ZDN-Register, auf dem Kryptocoprozessor abgespeichert.

In einem Block 1030 wird dann bestimmt, ob die Variable n gleich 0 ist, oder ob der Verschiebungswert $s_N$ gleich -k ist. k ist ein Wert, welcher den maximalen Verschiebungswert, welcher durch die Hardware vorgegeben ist, definiert. Im ersten Durchgang wird der Block 1030 mit NEIN beantwortet, so daß in einem Block 1040 der Parameter n dekrementiert wird, und daß in einem Block 1060 auch der Reduktions-Verschiebungswert um 1 dekrementiert wird. Dann wird in einem Block 1080 die Variable ZDN neu belegt, nämlich mit ihrem halben Wert, was durch eine Rechts-Verschiebung des im ZDN-Register stehenden Werts ohne weiteres erreicht werden kann. In einem Block 1100 wird dann festgestellt, ob der Absolutwert des aktuellen Zwischenergebnisses größer als der im ZDN-Register stehende Wert ist.

Diese Vergleichsoperation im Block 1100 ist die zentrale Operation des Reduktions-Vorausschau-Verfahrens. Wird die Frage mit JA beantwortet, so ist die Iteration beendet und der Reduktions-Vorausschau-Parameter b wird, wie es im Block 1120 dargestellt ist, belegt. Wird die im Block 1100 zu beantwortende Frage dagegen mit NEIN beantwortet, so wird iterativ wieder zurückgesprungen, um die aktuellen Werte von n und $s_N$ im Block 1030 zu untersuchen. Wird der Block 1030 irgendwann in der Iteration mit JA beantwortet, so wird zu einem Block 1140 gesprungen, in dem der Reduktions-Parameter b zu Null gesetzt wird. In der in Fig. 9 im Block 950 dargestellten Drei-Operanden-Operation führt dies dazu, daß kein Modul addiert oder subtrahiert wird, was bedeutet, daß das Zwischenergebnis Z so klein war, daß keine modulare Reduktion erforderlich war. In einem Block 1160 wird dann die Variable n neu belegt, wobei dann in einem Block 1180 schließlich der Reduktions-Verschiebungs-Wert $s_N$ berechnet wird, welcher in einem Block 940 von Fig. 9 benötigt wird, um die Linksverschiebung des Moduls durchzuführen, um einen verschobenen Modul zu erreichen.

In den Blöcken 1200, 1220 und 1240 werden schließlich die aktuellen Werte von n und k hinsichtlich weiterer Variablen MAX und cur_k untersucht, um die aktuelle Belegung des N-Registers zu untersuchen, um sicherzustellen, daß keine Registerüberschreitungen stattfinden. Die näheren Details sind für die vorliegende Erfindung nicht von Bedeutung, sind jedoch in der DE 3631992 C2 detailliert beschrieben.

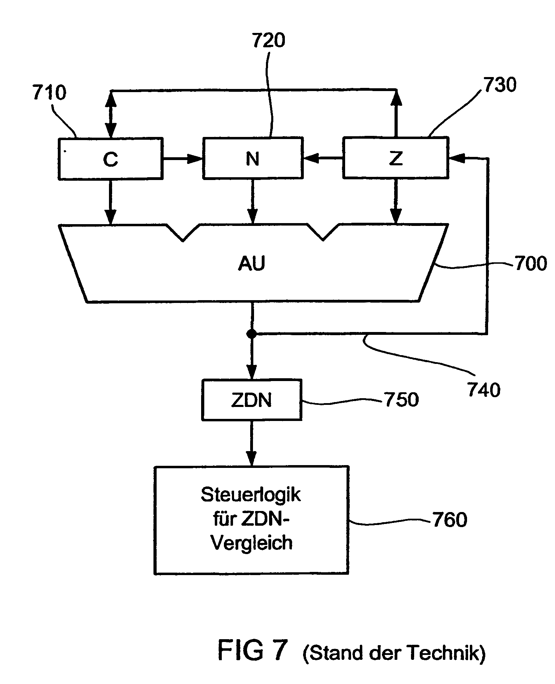

Der in den Fig. 9 und 10 dargestellte Algorithmus kann hardwaremäßig implementiert werden, wie es in Fig. 7 dargestellt ist. Für die in dem Block 950 durchzuführende Drei-Operanden-Operation wird eine arithmetische Einheit 700 benötigt, die in Fig. 7 mit AU bezeichnet ist. Dieselbe ist mit einem Register C 710 für den Multiplikanden, mit einem Register N 720 für den Modul und mit einem Register Z 730 für das aktuelle Zwischenergebnis der modularen Multiplikation gekoppelt. Aus Fig. 7 ist ferner zu sehen, daß das Ergebnis der Drei-Operanden-Operation über einen Rückkopplungspfeil 740 wieder in das Z-Register 730 eingespeist wird. Aus Fig. 7 ist ferner die Verbindung der Register untereinander zu sehen. Der in dem Block 1020 von Fig. 10 berechnete Wert ZDN muß in einem eigenen ZDN-Register 750 abgespeichert werden. Der ZDN-Vergleich bzw. die in Fig. 10 dargestellte Iterationschleife wird ferner durch eine eigene Steuerlogik 760 für den ZDN-Vergleich ablaufmäßig gesteuert.

Die Hauptarbeit des ZDN-Algorithmus zur Berechnung von Z: = M x C mod N besteht daher in den folgenden beiden Operationen:

1. Berechnung der Verschiebungswerte $s_Z$ und $s_i$ für die Register Z und N, so daß folgende Gleichung erfüllt ist:

$$2/3\ N \times 2^{-si} < |Z| \leq 4/3\ N \times 2^{-si}$$

und

2. Berechnung der Drei-Operanden-Summe:

$$Z := 2^{sZ} Z + a\,C + b \times 2^{sz-si}\, N,$$

Der Multiplikations-Vorausschau-Parameter a und der Reduktions-Vorausschau-Parameter b können, wie es bekannt ist, Werte von -1, 0 und +1 einnehmen.

Es sei darauf hingewiesen, daß das Zwischenergebnis Z, der Multiplikand C und der Modul N Langzahlen sind, also Zahlen, deren Anzahl von Stellen bzw. Bits durchaus größer als 512 sein können, wobei diese Zahlen auch bis zu über 2048 Stellen haben können.

Der in dem Block 1100 durchzuführende Vergleich des aktuellen Zwischenergebnisses Z mit dem Wert ZDN wird jedoch aus Rechenzeitgründen nicht mit sämtlichen Bits von Z durchgeführt, sondern lediglich mit einer Anzahl von höchstwertigen Bits von Z, wobei sich hierfür eine Anzahl von 32 Bits als ausreichend herausgestellt hat, um eine sehr hohe Genauigkeit für das Vergleichsergebnis zu erhalten.

Für die für diesen Vergleich erforderlichen 32 höchstwertigen Bits von 2/3 N wird, wie es in Fig. 7 durch das Bezugszeichen 750 dargestellt ist, ein eigenes Register benötigt, welches als das ZDN-Register bezeichnet wird.

Ferner wird ein eigener Hardware-Komparator benötigt, der für den aktuellen Wert im Z-Register und den aktuellen Wert im ZDN-Register den richtigen $s_i$-Wert berechnet, so daß folgende Gleichung erfüllt ist:

$$2/3\; 2^{-si}\, N < |Z| \leq 4/3\; 2^{-si}\, N$$

Nachteilig an diesem Verfahren ist daher zum einen, daß sowohl das zusätzliche ZDN-Register als auch der Hardware-Komparator extra Chipfläche benötigen. Andererseits ist die Berechnung von 2/3 N und die Berechnung des Hilfs-Verschiebungswerts $s_i$ im ZDN-Algorithmus, die durch die in Fig. 10 gezeigte Iterationsschleife durchgeführt wird, für den gesamten Algorithmus zeitkritisch und kann durchaus bestimmend für die Gesamtausführungszeit des Algorithmus sein.

Die Fachveröffentlichung "Faster Modular Multiplication By Operand Scaling" von Colin D. Walter, Advances In Cryptology, Santa Barbara, 11.-15. August 1991, Proceedings Of The Conference On Theory And Applications Of Cryptographic Techniques (Crypto), Berlin, Springer, DE, 1991, Seiten 313-323, beschreibt Techniken zum Beschleunigen der modularen Multiplikation, wobei insbesondere ein Geschwindigkeitsvorteil durch Skalieren des Moduls erreicht wird. Die sich ergebende Hardware ist nur durch die Geschwindigkeit der Addition begrenzt. Der Modul M wird um einen Faktor f skaliert, so dass das Produkt f.M. q höchstwertige Stellen hat, die fest sind. Der Quotient ist dann in der Berechnung einfacher, da er nicht länger von den höchstwertigen Stellen abhängt, da diese fest sind.

Die Aufgabe der vorliegenden Erfindung besteht darin, ein verbessertes Konzept zum modularen Multiplizieren zu schaffen, das zum einen platzsparender implementiert werden kann, und das zum anderen weniger Rechenzeit benötigt.

Diese Aufgabe wird durch ein Verfahren zum modularen Multiplizieren nach Patentanspruch 1 oder durch einen Prozessor zum modularen Multiplizieren nach Patentanspruch 10 gelöst.

Der vorliegenden Erfindung liegt die Erkenntnis zugrunde, daß der rechenzeitaufwendige Vergleich des aktualisierten Zwischenergebnisses mit dem Wert ZDN, also dem 2/3-fachen des Moduls N, dadurch erleichtert werden kann, wenn zunächst der Modul N in einen transformierten Modul $N^T$ transformiert wird, und die gesamte modulare Multiplikation mit dem transformierten Modul $N^T$ anstatt des eigentlichen Moduls durchgeführt wird. Erfindungsgemäß wird der Modul derart transformiert, daß der vorbestimmte Bruchteil des transformierten Moduls, also bei einem bevorzugten Ausführungsbeispiel das 2/3-fache des transformierten Moduls eine bestimmte Zahl wird, die so gewählt wird, daß der Vergleich von 2/3 $N^T$ mit dem Zwischenergebnis Z trivial wird. Gemäß der vorliegenden Erfindung wird die Transformation so durchgeführt, daß der vorbestimmte Bruchteil des transformierten Moduls eine höherwertige Stelle mit einem ersten vorbestimmten Wert hat, der zumindest eine niederwertige Stelle folgt, die einen zweiten vorbestimmten Wert hat. In binärer Darstellung und Zweier-Komplement-Konvention, in der das höchstwertige Bit das Vorzeichen angibt, wird die Transformation des Moduls in den transformierten Modul so ausgeführt, daß das zweithöchstwertige Bit von 2/3 $N^T$ eine binäre Eins ist, während das dritthöchste Bit und noch weitere niederwertigere Bits Nullen sind.

In diesem Fall ist der Vergleich derart trivial, daß einfach die Anzahl der Stellen zwischen der höchstwertigen Eins des vorbestimmten Bruchteils des transformierten Moduls und dem aktualisierten Zwischenergebnis Z der modularen Multiplikation abgezählt werden muß, um den Verschiebungswert $s_i$ zu erhalten, aus dem dann der Reduktions-Verschiebungswert $s_N$ einfach dadurch ermittelt werden kann, daß von dem Multiplikations-Verschiebungs-Wert des parallel ablaufenden Multiplikations-Vorausschau-Verfahrens der sogenannte Hilfs-Verschiebungswert $s_i$, welcher

durch den ZDN-Vergleich erhalten wird, subtrahiert wird.

Das gesamte ZDN-Verfahren wird genauso wie im Stand der Technik abgearbeitet. Es wird jedoch nun statt des Moduls N der transformierte Modul $N^T$ verwendet, so daß schließlich ein "Transformations-Ergebnis" der modularen Multiplikation erhalten wird, das in der Restklasse des transformierten Moduls $N^T$ ist. Eine abschließende Rücktransformation, derart, daß das Transformations-Ergebnis der modularen Multiplikation unter Verwendung des ursprünglichen Moduls N modular reduziert wird, liefert dann das eigentliche Ergebnis der modularen Multiplikation des Multiplikators M mit dem Multiplikanden C unter Verwendung des Moduls N.

Bevorzugte Ausführungsbeispiele der vorliegenden Erfindung werden nachfolgend bezugnehmend auf die beiliegenden Zeichnungen detailliert erläutert. Es zeigen:

Fig. 1        ein Ablaufdiagramm des erfindungsgemäßen Konzepts zum modularen Multiplizieren;

Fig. 2        die Aufteilung eines Moduls N in einen ersten Abschnitt $N_T$ von Bits und in einen zweiten Abschnitt $N_R$ von Bits;

Fig. 3        die Aufteilung des transformierten Moduls $N^T$ in einen ersten Abschnitt von Stellen mit der Länge L ($N^T$) und die verbleibenden Stellen;

Fig. 4        eine Darstellung der Stellen des 2/3-fachen des transformierten Moduls $N^T$;

Fig. 5        eine schematische Darstellung der Stellen des transformierten Moduls mit Randomisierung;

Fig. 6        eine schematische Darstellung eines Rechenwerks zum Ausführen der modularen Multiplikation gemäß der vorliegenden Erfindung;

Fig. 7        eine schematische Darstellung eines Rechenwerks für das bekannte ZDN-Verfahren;

Fig. 8a       bis 8c eine schematische Darstellung des Zusammenhangs zwischen dem Multiplikations-Verschiebungswert $s_Z$, dem Hilfs-Verschiebungswert $s_i$ und dem Reduktions-Verschiebungswert $s_N$;

Fig. 9        eine Flußdiagrammdarstellung des bekannten ZDN-Verfahrens; und

Fig. 10       eine Flußdiagrammdarstellung des bekannten Reduktions-Vorausschau-Verfahrens.

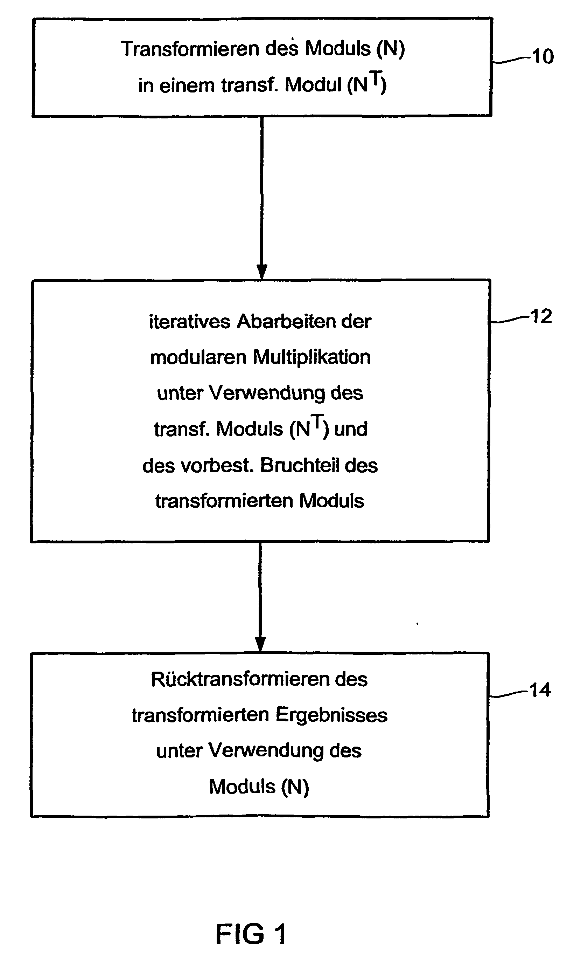

Fig. 1 zeigt ein Ablaufdiagramm des erfindungsgemäßen Verfahrens zum modularen Multiplizieren eines Multiplikanden C mit einem Multiplikator M unter Verwendung eines Moduls N. Zunächst wird in einem Schritt 10 der Modul N in einen transformierten Modul $N^T$ gemäß folgender Gleichung transformiert:

$$N^T = T \times N.$$

In einem Schritt 12 wird dann die modulare Multiplikation unter Verwendung des transformierten Moduls $N^T$ und des vorbestimmten Bruchteils des transformierten Moduls, der beim bevorzugten Ausführungsbeispiel 2/3 beträgt, abgearbeitet. Bezogen auf die modulare Exponentiation bedeutet dies, daß eine RSA-Gleichung folgender Form be-rechnet wird:

$$C^T := M^d \bmod N^T.$$

Es wird also das Ergebnis der modularen Exponentiation C nicht in der durch den Modul N definierten Restklasse sondern in der durch den transformierten Modul $N^T$ definierten Restklasse berechnet, weshalb auf der linken Seite der obigen Gleichung nicht C sondern $C^T$ steht. Das erfindungsgemäße Konzept zeichnet sich dadurch aus, daß durch die Verwendung des transformierten Moduls $N^T$ die Berechnung des Hilfs-Reduktions-Verschiebungswerts $s_i$, die der Iterationsschleife von Fig. 10 des bekannten Reduktions-Vorausschau-Verfahrens entspricht, stark vereinfacht ist.

In einem abschließenden Schritt 14 wird dann wieder eine Rück-Transformation von $N^T$ zu N durchgeführt, indem eine Operation ausgeführt wird, die folgender Gleichung entspricht:

$$C: = C^T \bmod N.$$

Das transformierte Ergebnis $C^T$, das in der Restklasse des transformierten Moduls $N^T$ liegt, wird dabei vorzugsweise durch eine einfache Verschiebungs/Subtraktions-Reduktion in die Restklasse des Moduls N zurückgeführt, so daß C das Ergebnis der modularen Exponentiation ist.

Die Transformation des Moduls N in einen transformierten Modul $N^T$ unter Verwendung des Transformators T aus Schritt 10 wird so durchgeführt, daß der vorbestimmte Bruchteil des transformierten Moduls, also beim bevorzugten Ausführungsbeispiel das 2/3-fache des transformierten Moduls, eine höherwertige Stelle mit einem ersten vorbestimmten Wert hat, der zumindest eine niederwertige Stelle folgt, die einen zweiten vorbestimmten Wert hat. Damit kann der Vergleich des Zwischenergebnisses Z mit dem 2/3-fachen des transformierten Moduls stark vereinfacht werden, nämlich indem die oberste Stelle von Z, die ebenfalls den ersten vorbestimmten Wert hat, gesucht wird, und die Differenz zwischen der höherwertigen Stelle mit ersten vorbestimmten Wert des vorbestimmten Bruchteils des transformierten Moduls und der obersten Stelle des Zwischenergebnisses Z mit dem ersten vorbestimmten Wert gleich der Differenz $s_i$ ist.

Zusammengefaßt stellt sich dies folgendermaßen dar. N wird vorzugsweise in der 32-Bit-CPU und nicht im KryptoCoprozessor in einen transformierten Modul $N^T$ transformiert, so daß gilt:

$$N^T: = T \times N,$$

wobei T eine natürliche Zahl ist.

Für $N^T$ ergibt sich folgende Gestalt, wenn sämtliche verwendeten Zahlen Binärzahlen sind:

$$N^T = 1100... 0 \, XX...XX$$

Für das 2/3-fache des transformierten Moduls ergibt sich dann folgender Wert:

$$2/3 \, N^T = 100... 0 \, X'X'...X'X'$$

Aus $N^T$ und $2/3 \, N^T$ ist zu sehen, daß beide eine erste Portion von beispielsweise 16 Bits haben, und dann eine Portion von L(N) Bits X bzw. X'. Für den sogenannten ZDN-Vergleich werden nur die obersten 16 Bits des 2/3-fachen des transformierten Moduls $N^T$ herangezogen, da sich dann bereits eine Fehlerwahrscheinlichkeit von besser als etwa $2^{-10}$ ergibt. Es müssen also nicht alle 512, 1024 oder 2048 Bits des 2/3-fachen des transformierten Moduls zum ZDN-Vergleich herangezogen werden, sondern es genügt, wenn dieser Vergleich mit den obersten 16 Bits des transformierten Moduls durchgeführt wird. Selbstverständlich könnten auch noch weniger Bits von $2/3 \, N^T$ zum Vergleich herangezogen werden, dann steigt jedoch die Fehlerwahrscheinlichkeit nach und nach an. Da die Fehler jedoch unkritisch sind und nur zu einem suboptimalen Verhalten des Reduktions-Vorausschau-Verfahrens führen, ist dieser Weg ohne weiteres gangbar.

Das 2/3-fache des transformierten Moduls $N^T$ hat somit eine höherwertige Stelle mit dem Wert 1, der zumindest eine niederwertige Stelle folgt, die einen Wert 0 hat, also einen zweiten vorbestimmten Wert. Bei dem vorstehend beschriebenen Ausführungsbeispiel ist die Anzahl der niederwertigen Stellen 15. Selbstverständlich können auch hier größere oder kleinere Anzahlen genommen werden, je nach dem, welche Größenunterschiede zwischen dem Zwischenergebnis Z und dem 2/3-fachen des transformierten Moduls $N^T$ zu erwarten sind bzw. bearbeitet werden sollen. Für den Betrag des Zwischenergebnisses Z der modularen Multiplikation, also des Ergebnisses der Drei-Operanden-Addition im Block 950 von Fig. 9 ergibt sich folgende Gestalt:

$$|Z| = 00...01YY...Y$$

Der Hilfs-Verschiebungswert $s_i$ wird gemäß folgender Gleichung berechnet:

$$2/3 \, N^T \times 2^{-si} < |Z| \leq 4/3 \, N^T \times 2^{-si}.$$

Aufgrund der Topologie des 2/3-fachen des transformierten Moduls $N^T$ ist der Wert $s_i$ immer der Abstand

zwischen dem höchstwertigen Bit mit einer 1 des 2/3-fachen des transformierten Moduls $N^T$ und der höchstwertigen 1 des Betrags des Zwischenergebnisses.

Erfindungsgemäß kann diese Stellendifferenz bzw. der Wert $s_i$ trivial ermittelt werden. Keine Iteration ist mehr erforderlich.

Darüber hinaus ist kein ZDN-Register mehr erforderlich, um das 2/3-fache des Moduls zu speichern, da per Definition zumindest die oberen beispielsweise 16 Bit des 2/3-fachen des transformierten Moduls $N^T$ immer die gleiche Gestalt haben. Kein Bit-Komparator ist mehr erforderlich. Die Wertigkeitsdifferenz der höchstwertigen Stelle des 2/3-fachen des transformierten Moduls $N^T$ mit einer "1" und der höchstwertigen Stelle von Z mit einer "1" kann ohne weiteres beispielsweise durch eine bitweise XOR-Verknüpfung des Registers für den transformierten Modul und des Registers für das Zwischenergebnis Z durchgeführt werden. $s_i$ ist dann gleich der Differenz der Wertigkeit der Stelle, wo die XOR-Verknüpfung eine erste "1" ausgibt, und wo die XOR-Verknüpfung eine zweite "1" ausgibt.

Aufgrund der Tatsache, daß kein ZDN-Register und kein ZDN-Komparator erforderlich sind, ist das gesamte Rechenwerk auf einer kleineren Chipfläche unterzubringen.

Außerdem hat der Krypto-Control-Part, also die Steuerlogik für den ZDN-Vergleich (760 in Fig. 7), eine kleinere Komplexität, da die aufwendige Iterationsschleife von Fig. 10 nicht ausgeführt werden muß. Schließlich geht die Berechnung schneller, so daß sich durch die Berechnung des Hilfs-Verschiebungswerts $s_i$ keine Timing-Probleme mehr für den gesamten Algorithmus ergeben.

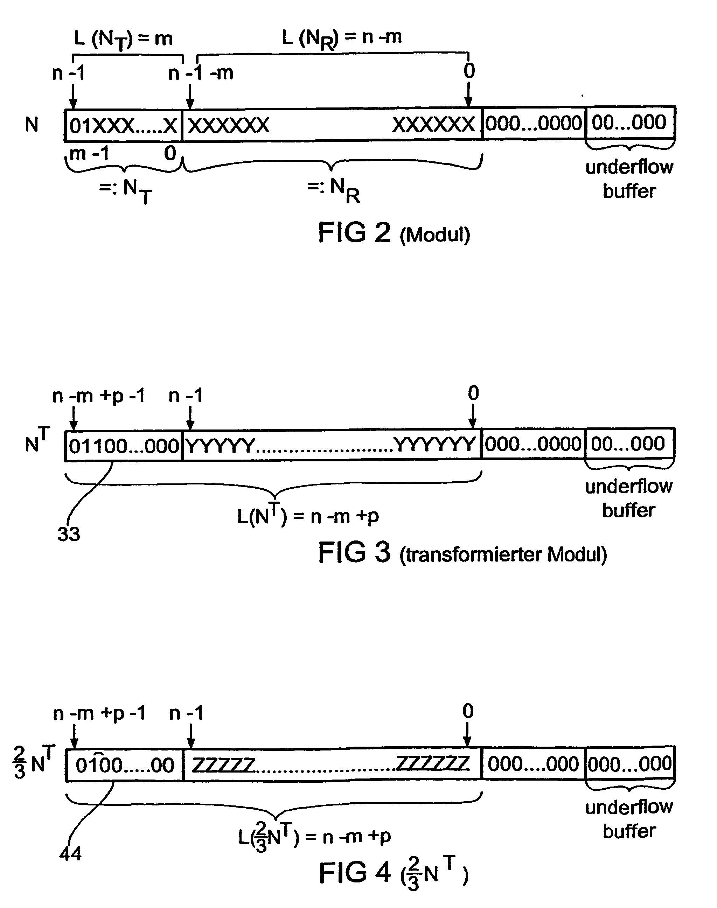

Im nachfolgenden wird anhand der Figuren 2 bis 5 auf die erfindungsgemäße Transformation genauer eingegangen.

Wie es bereits ausgeführt worden ist, besteht ein wesentlicher Teil des ZDN-Algorithmus darin, daß folgende Gleichung erfüllt ist

$$2/3 \; 2^{-si} \; N < |Z| \leq 4/3 \; 2^{-si} \; N.$$

$s_i$ wird als Hilfs-Verschiebungswert bezeichnet und ist der Verschiebungswert, der notwendig ist, um Z stellenmäßig zu derselben Position wie N zu schieben. Im Stand der Technik waren zur Berechnung von $s_i$ Vergleichsoperationen von |Z| mit 2/3 N notwendig.

Erfindungsgemäß wird der Vergleich mit 2/3 vereinfacht, indem der Modul in den transformierten Modul $N^T$ transformiert wird, wobei der transformierte Modul $N^T$ größer als N ist, bevor irgendeine modulare Operation mit N ausgeführt wird. Dann werden alle Berechnungen Modulo $N^T$ durchgeführt. Nachdem das Ergebnis der Berechnung jedoch in der Restklasse N sein muß, wird erfindungsgemäß eine abschließende Reduktion mit N durchgeführt.

Wie es in Fig. 2 gezeigt ist, sei N eine Ganzzahl mit einer Länge von N Bits. Da der Modul N immer eine positive Ganzzahl ist, d. h. MSB = 0 in der Zweier-Komplement-Darstellung, ist das Vorzeichenbit gleich 0 und das zweit-höchstwertige Bit (MSB -1) des Moduls N ist immer gleich 1. Für den ZDN-Vergleich ist es nicht erforderlich, sämtliche Bits des Moduls mit sämtlichen Bits des Zwischenergebnisses zu vergleichen, sondern es ist ausreichend, eine Anzahl von m Bits für den ZDN-Vergleich zu verwenden. Die höchstwertigen m Bits des Moduls N definieren einen ersten Teil des Moduls $N_T$, während die restlichen N-m Bits des Moduls einen zweiten Teil $N_R$ des Moduls definieren. Bei einem bevorzugten Ausführungsbeispiel ist m gleich 16. Selbstverständlich sind auch größere oder kleinere Werte von m möglich.

Wie es in Fig. 3 gezeigt ist, wird die Transformation derart ausgeführt, daß der transformierte Modul $N^T$ 16 Bit länger ist als der ursprüngliche Modul von Fig. 2.

Für den ZDN-Vergleich ist es ausreichend, die ersten 16 Bit von $N^T$ zu verwenden, wobei bei einem bevorzugten Ausführungsbeispiel der vorliegenden Erfindung nur 12 Bits zum Vergleich verwendet werden, während die niederstwertigen 4 Bits einen Puffer für mögliche Überträge darstellen, die von noch niederwertigeren Bits kommen können.

In diesem Fall ist die Wahrscheinlichkeit, daß der Vergleich ein falsches Ergebnis ergibt, kleiner als $2^{-12}$. Falls der Vergleich ein falsches Ergebnis liefert, wird nur ein suboptimaler Reduktions-Verschiebungswert $s_N$ erzeugt, das Ergebnis Modulo N ist jedoch nach wie vor korrekt.

Wenn der Modul wie in Fig. 2 in der Zweierkomplementdarstellung verwendet wird, dann kann der Modul N folgendermaßen zerlegt werden:

$$N = 2^{n-m} \; N_T + N_R.$$

Nun wird N zu $N^T$ unter Verwendung des Transformators T transformiert, wobei T eine geeignet gewählte Ganzzahl ist, was aus Kongruenzgründen der Fall sein muß. $N^T$ sollte die in Fig. 3 gezeigte Form haben, d. h. das höchstwertige Bit (MSB) von $N^T$ muß gleich 0 sein, da $N^T$ eine positive Ganzzahl sein soll. Wie es nachfolgend ausgeführt wird, müssen das zweithöchstwertige und das dritthöchstwertige Bit des transformierten Moduls gleich 1 sein, während sämtliche anderen Bits des obersten Abschnitts des transformierten Moduls $N^T$, welcher in Fig. 3 mit dem Bezugszeichen 33 bezeichnet ist, einen Wert von "0" haben sollten. Nur in diesem Fall ergibt sich nämlich für das 2/3-fache von $N^T$, daß der oberste Abschnitt des 2/3-fachen von $N^T$, wie es in Fig. 4 gezeigt ist, lediglich ein Bit mit einer "1" hat, während alle anderen Bits in diesem obersten Abschnitt 44 gleich "0" sind, so daß der bereits beschriebene triviale Vergleich zur Bestimmung von $s_i$ ausgeführt werden kann.

Zunächst wird jedoch anhand von Fig. 3 auf die Berechnung des transformierten Moduls $N^T$ unter Verwendung des Transformators T eingegangen. Es gelte folgende Definition:

$$N^T = T\,N$$

$$= T(2^{n-m}\,N_T + N_R)$$

Für den Transformator T gilt folgendes:

$$T = \left\lfloor \frac{2^{p-2} + 2^{p-3}}{N_T} \right\rfloor$$

Unter Verwendung von Gleichung 17 ergibt sich für den transformierten Modul $N^T$ folgendes:

$$N^T = \left\lfloor \frac{2^{p-2} + 2^{p-3}}{N_T} \right\rfloor (2^{n-m}N_T + N_R)$$

$$N^T = (2^{n+p-m-2} + 2^{n+p-m-3})\frac{N_T}{N_T} + (2^{p-2}+2^{p-3})\frac{N_R}{N_T}.$$

Wenn beispielsweise typische Werte für p und m genommen werden, also p gleich 32 Bit und m gleich 16 Bit, so ergibt sich für $N^T$ folgendes:

$$N^T = 2^{n+14} + 2^{n+13} + N_R\,\frac{2^{p-2}+2^{p-3}}{N_T}.$$

Es sei darauf hingewiesen, daß die Berechnung von $N^T$ vorzugsweise in der Host-CPU durchgeführt wird, und nicht im KryptoCoprozessor. Die Host-CPU umfaßt ein Kurzzahl-Rechenwerk, was jedoch für die Berechnung von $N^T$ ausreichend ist. Da T eine Ganzzahl sein muß und die Berechnungen innerhalb des Krypto-Coprozessors Modulo $N^T$ anstatt Modulo N durchgeführt werden, wobei $N^T$ größer als N ist, sind nur die ersten p-m gleich 16 Bits von $N^T$ für den trivialen ZDN-Vergleich, um den Hilfs-Verschiebungswert $s_i$ zu berechnen, relevant. Die anderen n Bits von $N^T$ können irgendeine Zahl sein, sie sind für die Berechnung des Hilfs-Verschiebungswerts $s_i$, also für den Vergleich mit Z nicht relevant. Selbstverständlich werden jedoch alle Bits des transformierten Moduls $N^T$ für die Drei-Operanden-Addition benötigt, die nunmehr statt unter Verwendung des verschobenen Moduls unter Verwendung des verschobenen transformierten Moduls ausgeführt wird.

Wie es in Fig. 17 dargestellt ist, ist für die gewählten Werte für m und p der Transformator T eine 16-Bit-Ganzzahl. Daher muß die Division, die zur Berechnung von T erforderlich ist, bzw. die zur Berechnung von $N^T$ erforderlich ist, nur für die höchstwertigen 32 Bits durchgeführt werden, und kann daher schnell und einfach auf der Host-CPU programmiert werden.

In Fig. 4 ist das 2/3-fache des transformierten Moduls $N^T$ gezeigt. Da das MSB-1 und das MSB-2 von $N^T$ gleich "1" sind, wie es in Fig. 3 gezeigt ist, und folgendes gilt:

$$(11)_2 = (3)_{10} \text{ und } (2/3 \times 3)_2 = (2)_{10} = (10)_2,$$

ergibt sich ein einfaches Bitmuster für das 2/3-fache des transformierten Moduls $N^T$, wobei die Länge des 2/3-fachen des transformierten Moduls $N^T$ gleich n-m+p ist.

Aufgrund der speziellen Gestalt von 2/3 $N^T$ wird nun der Vergleich mit $|Z|$ sehr einfach. Es ist bekannt, daß die höchstwertige Eins von 2/3 $N^T$ an einer Position n+p-m-2 an dem Beginn einer modularen Operation ist. Ein Zeiger für das Register Z startet dann bei einem bevorzugten Ausführungsbeispiel an dem MSB von Z und sucht nach der ersten "1" von Z. Wenn das MSB von Z gleich 1 ist, dann ist Z eine negative Zahl, und man sucht statt dessen die erste Null von Z.

Die Differenz der Bitposition der ersten Eins im Register N und im Register Z bestimmt den Hilfs-Verschiebungswert $s_i$.

Da das Ergebnis der Modulo-Operation in der Restklasse N sein muß, wird erfindungsgemäß eine Endreduktion Modulo N durchgeführt, es muß also eine Rücktransformation (Schritt 14 in Fig. 1) durchgeführt werden.

Die Transformation von N zu $N^T$ hat die folgenden Vorteile im Vergleich zum bekannten ZDN-Vergleich:

Statt der Berechnung von 2/3 N innerhalb des Kryptocoprozessors kann eine einfache Transformation von N in $N^T$ in der Host-CPU durchgeführt werden.

Auf dem Chip werden kein ZDN-Register und keine Komparatorlogik benötigt, weshalb die Chipgröße kleiner und die Komplexität des Coprozessors geringer werden.

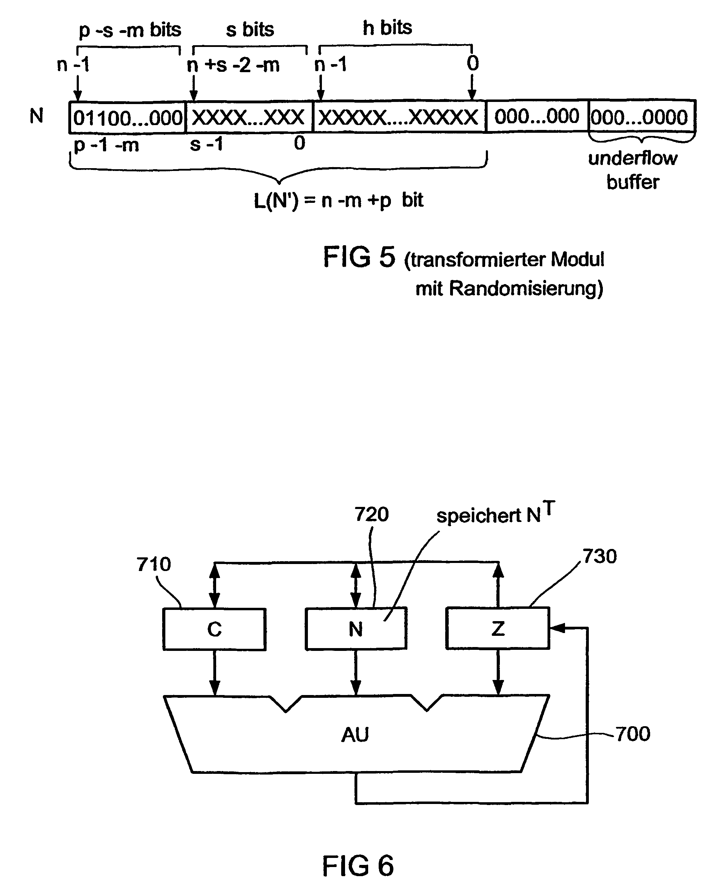

Schließlich kann die Transformation von N in $N^T$ mit einer Randomisierung des Moduls N kombiniert werden, wie es anhand von Fig. 5 dargestellt ist. Wenn R eine s Bit lange zufällige Zahl ist, hat der randomisierte transformierte Modul $N^T$ die in Fig. 5 gezeigte Form. Durch die Randomisierungszahl N wird der randomisierte transformierte Modul im Vergleich zu dem Fall, bei dem keine Randomisierung durchgeführt worden ist (Fig. 3) um s Bit länger, also um die Anzahl der Stellen von R.

Gleichungsmäßig läßt sich dies folgendermaßen ausdrücken:

$$N^T = T\,N$$

$$= T(2^{n-m}\,N_T + N_R)$$

Der randomisierte Transformator T lautet dann folgendermaßen:

$$T = \left|\frac{2^{p-2}-2^{p-3}+R}{N_T}\right|$$

Damit ergibt sich folgender Ausdruck für den randomisierten transformierten Modul:

$$N^T = \left|\frac{2^{p-2}+2^{p-3}+R}{N_T}\right|(2^{n-m}N_T+N_R)$$

$$N^T = (2^{n+p-m-2}+2^{n+p-m-3}+R\,2^{n-m})\frac{N_T}{N_T} + (2^{p-2}+2^{p-3}+R)\frac{N_R}{N_T}.$$

Wenn für p gleich 144 Bits, m gleich 16 Bit und s gleich 112 Bit eingesetzt werden, ergibt sich für den transformierten Modul $N^T$ einschließlich Randomisierung folgender Wert:

$$N^T = 2^{n+126} + 2^{n+125} + R\,2^{n-16} + N_R\,\frac{2^{144}+2^{143}+R}{N_T}.$$

Die Bitlänge von $N^T$ ist dann:

$$L(N^T) = n+p-m = n+m+s = n+16+112 = n+128 \text{ Bits}$$

Fig. 6 zeigt ein erfindungsgemäßes Rechenwerk, das im Vergleich zu Fig. 7 nunmehr kein ZDN-Register hat, sondern lediglich noch eine arithmetische Einheit 700, ein C-Register 710, ein N-Register 720 und ein Z-Register 730, wobei im N-Register 720 nun nicht mehr der Modul bzw. ein verschobener Modul gespeichert ist, sondern der transformierte Modul bzw. ein verschobener transformierter Modul oder aber ein randomisierter transformierter Modul oder ein verschobener randomisierter transformierter Modul.

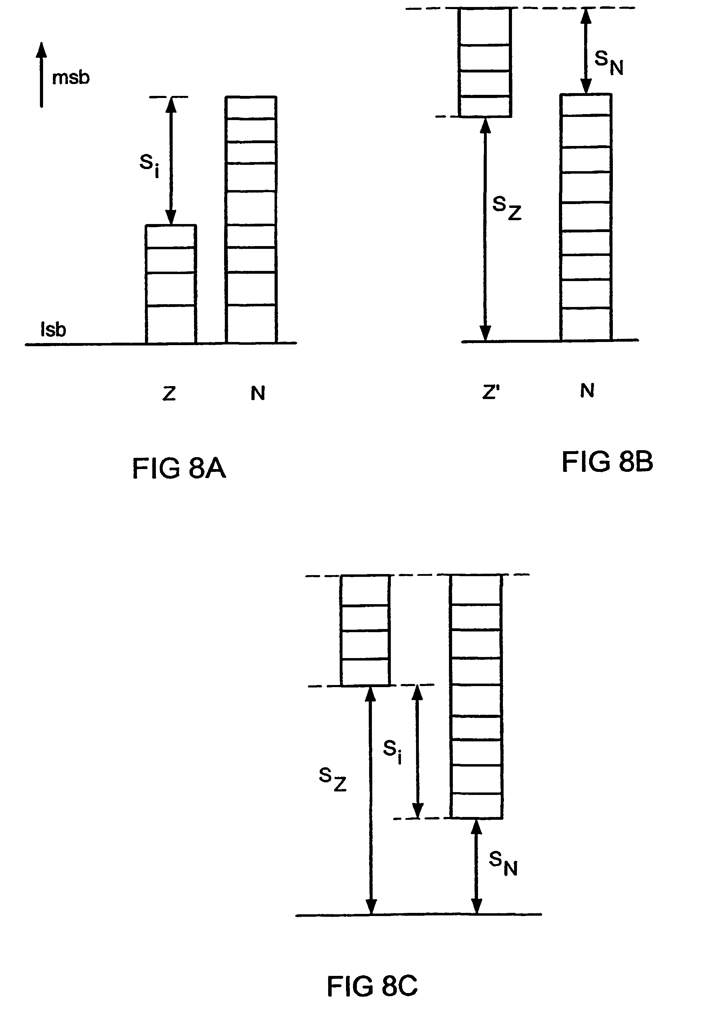

Im nachfolgenden wird auf die Fig. 8a bis 8c eingegangen, um den Zusammenhang zwischen dem Hilfs-Verschiebungs-Wert $s_i$ und dem Reduktions-Verschiebungswert $s_N$ darzustellen.

In nachfolgenden wird auf die Fig. 8a bis 8c eingegangen, um die Berechnung des Reduktions-Verschiebungswerts $s_Z$ unter Verwendung des Hilfs-Reduktions-Verschiebungswerts $s_i$ darzustellen. In Fig. 8a sind ein Zwischenergebnis Z und ein Modul N dargestellt. Lediglich beispielhaft hat das Zwischenergebnis vier Bits, während der Modul 9 Bits hat. Nunmehr sei angenommen, daß in dem Block 214 von Fig. 2 ein verschobenes Zwischenergebnis Z' berechnet wird, was durch Multiplizieren mit $s_Z$ erreicht werden kann. So sei angenommen, daß im Multiplikator 8 Nullen waren, was dazu führt, daß der Multiplikations-Verschiebungswert $s_Z$ gleich 8 war. Um eine modulare Reduktion zu erreichen, muß der Modul N in die Größenordnung des verschobenen Zwischenergebnis Z' kommen. Erfindungsgemäß soll.der Modul N so weit verschoben werden, daß das oberste Bit des verschobenen Zwischenergebnis-Polynoms Z' und das oberste Bit des verschobenen Moduls N gleich sind. Wie es aus Fig. 8b zu sehen ist, ist hierzu ein Reduktions-Verschiebungswert von $s_N$ gleich 3 erforderlich.

Aus Fig. 8b ist ebenfalls zu sehen, daß die Ermittlung von $s_N$ eigentlich erst durchgeführt werden kann, wenn $s_Z$ berechnet worden ist, d. h. daß eine parallele Ausführung der Blöcke 210 und 212 von Fig. 2, wie es für die vorliegende Erfindung bevorzugt wird, nicht möglich ist. Aus diesem Grund wird der Hilfs-Verschiebungs-Parameter $s_i$ ein-geführt. Vorteilhaft an $s_i$ ist, daß dieser Wert berechnet werden kann, ohne das $s_Z$ des aktuellen Schritts zu kennen.

Aus Fig. 8c ist zu sehen, daß $s_Z$ immer gleich der Summe aus $s_i$ und $s_N$ ist. $s_N$ hängt somit immer mit $s_Z$ und $s_i$ derart zusammen, daß folgende Gleichung gilt:

$$s_N = s_Z - s_i.$$

Das zeitaufwendige iterative Verfahren zum Bestimmen von $s_N$ kann somit zerlegt werden in ein zeitaufwendiges iteratives Verfahren zum Bestimmen von $s_i$ (Schleife 416) und eine schnelle Differenz-Operation (Block 422 von Fig. 4). Damit ist eine nahezu parallele Ausführung der beiden Vorausschau-Verfahren möglich, wobei die einzige serielle Komponente darin besteht, daß vor dem Berechnen des Blocks 422 (Fig. 4) der tatsächliche Wert von $s_Z$ durch den Multiplikations-Vorausschau-Algorithmus bereits berechnet und geliefert worden ist (Pfeil 230 in Fig. 2).

Zusammenfassend sei ausgeführt, daß die vorliegende Erfindung den Vergleich zwischen 2/3 N und dem Betrag von Z im Vergleich zum bekannten ZDN-Verfahren vereinfacht. Im Gegensatz zum bisherigen bekannten Verfahren, bei dem die obersten 32 Bit von 2/3 N im Kryptocoprozessor berechnet und in einem separaten 32-Bit-Register, dem ZDN-Register, abgelegt wurden, wobei der Vergleich von 2/3 N mit dem Betrag von Z gemäß dem bekannten ZDN-Verfahren in Hardware über einen Komparator ausgeführt wurde, der Bestandteil des Controlteils des Kryptocoprozessors war, wird nunmehr folgendermaßen vorgegangen. Der Modul N wird von der Host-CPU in einen transformierten Modul $N^T$ transformiert, der größer als N ist, wobei die ersten Bits von $N^T$ eine Konstante sind, die so gewählt ist, daß der Vergleich von 2/3 $N^T$ mit dem Betrag von Z trivial ist. Zur Verbesserung der Sicherheit gegen Informations-Leck-Attacken, wie z. B. SPA, DPA, Timing-Attacken, ..., kann die Transformation von N zu $N^T$ mit der Randomisierung des Moduls kombiniert werden, wie es ausgeführt worden ist.

Damit entfällt die 2/3 N-Berechnung im Kryptocoprozessor. Das ZDN-Register und die Komparatorlogik entfallen ebenso, wodurch sich eine kleinere Chipfläche und eine Verringerung der Komplexität des Controlteils im Kryptocoprozessor durch Wegfall der Komparatorlogik ergeben.

Bezugszeichenliste

| | |
|---|---|
| 10 | Transformieren des Moduls |
| 12 | Iteratives Abarbeiten der modularen Multiplikation |
| 14 | Rücktransformieren des transformierten Ergebnisses |
| 33 | Oberer Abschnitt des transformierten Moduls |
| 44 | Oberer Abschnitt des 2/3-fachen des transformierten Moduls |
| 700 | Arithmetische Einheit |
| 710 | C-Register |
| 720 | N-Register |
| 730 | Z-Register |
| 740 | Iterationsschleife |
| 750 | ZDN-Register |
| 760 | Steuerlogik für den ZDN-Vergleich |

900     Start des ZDN-Verfahrens
910     Multiplikations-Vorausschau-Verfahren für den ZDN-Algorithmus
920     Verschieben von Z nach links oder rechts
930     Reduktions-Vorausschau-Verfahren für den ZDN-Algorithmus
940     Verschieben des Moduls nach links
950     Drei-Operanden-Addition für den ZDN-Algorithmus
960     Ende des ZDN-Algorithmus
1000    Globale Variablen
1010    Initialisierung des Reduktions-Verschiebungswerts
1020    Berechnen von ZDN
1030    Untersuchen von n und $s_N$
1040    Dekrementieren von n
1060    Dekrementieren des Reduktions-Verschiebungswerts
1080    Berechnen von ZDN/2
1100    Vergleich des Zwischenergebnisses mit ZDN
1120    Bestimmen des Reduktions-Vorausschau-Parameters
1140    Bestimmen des Reduktions-Vorausschau-Parameters
1160    Berechnen von n
1180    Berechnen des Reduktions-Vorausschau-Parameters
1200    Untersuchen von n
1220    Berechnen von cur_k
1240    Berechnen von cur_k

**Patentansprüche**

1. Verfahren zum modularen Multiplizieren eines Multiplikanden (C) mit einem Multiplikator (M), wobei ein Modul (N) verwendet wird, unter Verwendung eines Multiplikations-Vorausschau-Verfahrens und eines Reduktions-Vorausschau-Verfahrens, innerhalb eines Prozessors mit einem Modulregister (720), einem Multiplikations-Zwischenergebnis-Register und einer arithmetische Einheit (700) deren Eingänge mit dem Modulregister (720) und dem Multiplikations-Zwischenergebnis-Register (730) verbunden sind, und wobei der Ausgang der genannten Arithmetischen Einheit (700) mit dem genannten Multiplikations-Zwischenergebnis-Register (730) zurückgekoppelt sowie auch mit einer Steuerlogik (760) verbunden ist (730), mit folgenden Schritten:

Transformieren (10) des Moduls (N) in einen transformierten Modul ($N^T$), der größer als der Modul (N) ist, und Speichern des transformierten Moduls in dem Modulregister (720), wobei ein vorbestimmter Bruchteil (2/3) des transformierten Moduls eine höherwertige Registerstelle mit einem ersten vorbestimmten Wert hat, der zumindest eine niederwertige Registerstelle folgt, die einen zweiten unterschiedlichen vorbestimmten Wert hat;

iteratives Abarbeiten (12) der modularen Multiplikation unter Verwendung des Multiplikations-Vorausschau-Verfahrens und des Reduktions-Vorausschau-Verfahrens unter Verwendung des transformierten Moduls ($N^T$), um am Ende der Iteration ein transformiertes Ergebnis für die modulare Multiplikation zu erhalten; und

Rücktransformieren (14) des transformierten Ergebnisses durch modulares Reduzieren des transformierten Ergebnisses unter Verwendung des Moduls (N),

wobei im Schritt des iterativen Abarbeitens (12) eine Mehrzahl von Iterationsschritten durchgeführt wird, wobei in einem Iterationsschritt ein Multiplikations-Zwischenergebnis ermittelt und in dem Multiplikations-Zwischenergebnis-Register (730) gespeichert wird, und wobei in dem Iterationsschritt ein Reduktions-Verschiebungswert ($s_N$) ermittelt wird, wobei der Reduktions-Verschiebungswert ($s_N$) unter Verwendung einer von der Steuerlogik ausge-führten Bestimmung der Anzahl ($s_i$) von Registerstellen zwischen der höherwertigen Registerstelle des Modulregisters mit dem ersten vorbestimmten Wert des transformierten Moduls ($N^T$) und der höchstwertigen Registerstelle des Multiplikations-Zwischenergebnis-Register (730), die den ersten vorbestimmten Wert hat, berechnet wird.

2. Verfahren nach Anspruch 1, bei dem für die Bestimmung der Anzahl ($s_i$) der Registerstellen eine bitweise XOR-Verknüpfung des Modulregisters und des Multiplikations-Zwischenergebnis-Registers (730) durchgeführt wird, wobei die Anzahl ($s_i$) gleich der Differenz der Wertigkeit der Stelle, an der die XOR-Verknüpfung eine erste "1" ausgibt, und der Wertigkeit der Stelle ist, an der die XOR-Verknüpfung eine zweite "1" ausgibt.

3. Verfahren nach Anspruch 2, bei dem in dem Multiplikations-Vorausschau-Verfahren ein Multiplikations-Verschiebungswert ($s_Z$) ermittelt wird, und bei dem ein Reduktions-Verschiebungs-Wert ($s_N$) für das Reduktions-Vorausschau-Verfahren durch Subtrahieren der bestimmten Anzahl ($s_i$) von Registerstellen von dem Multiplikations-Verschiebungswert ($s_Z$) berechnet wird.

4. Verfahren nach einem der vorhergehenden Ansprüche, bei dem der Schritt des iterativen Abarbeitens folgende Schritte aufweist:

in einem ersten Iterationsschritt:

(a) Durchführen eines Multiplikations-Vorausschau-Verfahrens, um einen Multiplikations-Verschiebungswert ($s_Z$) zu erhalten,

(b) Multiplizieren einer Basis potenziert mit dem Multiplikations-Verschiebungswert mit einem aktuellen Zwischenergebnis (Z), um ein verschobenes Zwischenergebnis (Z') zu erhalten;

(c) Durchführen eines Reduktions-Vorausschau-Verfahrens, um einen Reduktions-Verschiebungswert ($s_N$) zu erhalten durch Bestimmen eines Hilfs-Verschiebungswerts ($s_i$) als die Anzahl der Registerstellen und durch Berechnen des Reduktions-Verschiebungswerts unter Verwendung des Hilfs-Verschiebungswerts und des Multiplikations-Verschiebungswerts ($s_Z$) ;

(d) Multiplizieren des transformierten Moduls ($N^T$) mit der Basis potenziert mit dem Reduktions-Verschiebungswert, um einen verschobenen transformierten Modul ($N^{T'}$) zu erhalten; und

(e) Summieren des Zwischenergebnisses (Z') und des Multiplikanden (C) und Subtrahieren des verschobenen transformierten Moduls ($N^{T'}$), um ein aktualisiertes Zwischenergebnis (Z) zu erhalten.

5. Verfahren nach einem der vorhergehenden Ansprüche, bei dem der vorbestimmte Bruchteil des Moduls 2/3 beträgt.

6. Verfahren nach Anspruch 5, bei dem der Multiplikand (C), der Multiplikator (M) und der Modul (N) binär sind, bei dem die Basis 2 beträgt, und bei dem die höherwertige Registerstelle des vorbestimmten Bruchteils des transformierten Moduls ($N^T$) einen ersten vorbestimmten Wert von 1 hat, und die zumindest eine niederwertige Registerstelle einen zweiten vorbestimmten Wert von 0 hat.

7. Verfahren nach Anspruch 6, bei dem das höchstwertige Bit des transformierten Moduls ein Vorzeichen-Bit ist und ein höherwertiger Abschnitt des vorbestimmten Bruchteils des Moduls folgendermaßen lautet:

01000 xx ... xx,

wobei die mit xx bezeichneten Bits beliebige Werte haben können.

8. Verfahren nach Anspruch 7, bei dem der höherwertige Abschnitt des transformierten Moduls ($N^T$) folgendermaßen lautet:

01100 ... 00.

9. Verfahren nach einem der Ansprüche 1 bis 8, bei dem im Schritt des Transformierens (10) des Moduls eine Randomisierung des Moduls durchgeführt wird, so daß der transformierte Modul randomisiert ist.

10. Prozessor zum modularen Multiplizieren eines Multiplikanden (C) mit einem Multiplikator (M), wobei ein Modul (N) verwendet wird, unter Verwendung eines Multiplikations-Vorausschau-Verfahrens und eines Reduktions-Vorausschau-Verfahrens, wobei der Prozessor ein Modulregister (720), ein Multiplikations-Zwischenergebnis-Register (730) und eine arithmetische Einheit (700) aufweist, wobei die Eingänge der genannten arithmetische Einheit mit dem Modulregister (720) und dem Multiplikations-Zwischenergebnis-Register (730) verbunden sind, und wobei der Ausgang der genannten Arithmetischen Einheit (700) mit dem genannten Multiplikations-Zwischenergebnis-Register (730) zurückgekoppelt sowie auch mit einer Steuerlogik (760) verbunden ist mit folgenden Merkmalen:

einer Einrichtung zum Transformieren (10) des Moduls (N) in einen transformierten Modul ($N^T$), der größer als der Modul (N) ist, und zum Speichern des transformierten Moduls in dem Modulregister, wobei ein vorbestimmter Bruchteil des transformierten Moduls eine höherwertige Registerstelle mit einem ersten vorbestimmten Wert hat, der zumindest eine niederwertige Registerstelle folgt, die einen zweiten unterschieldichen vorbestimmten Wert hat;

einer Einrichtung zum iterativen Abarbeiten (12) der modularen Multiplikation unter Verwendung des Multiplikations-Vorausschau-Verfahrens und des Reduktions-Vorausschau-Verfahrens unter Verwendung des transformierten Moduls ($N^T$), um am Ende der Iteration ein transformiertes Ergebnis für die modulare Multiplikation zu erhalten; und

einer Einrichtung zum Rücktransformieren (14) des transformierten Ergebnisses durch modulares Reduzieren des transformierten Ergebnisses unter Verwendung des Moduls (N),

wobei die Einrichtung zum iterativen Abarbeiten (12) ausgebildet ist, um eine Mehrzahl von Iterationsschritten durchzuführen, wobei in einem Iterationsschritt ein Multiplikations-Zwischenergebnis ermittelt und in dem Multiplikations-Zwischenergebnis-Register (730) gespeichert wird, und wobei in dem Iterationsschritt ein Reduktions-Verschiebungswert ($s_N$) ermittelt wird, wobei der Reduktions-Verschiebungswert ($s_N$) unter Verwendung einer von der Steuerlogik ausgeführten Bestimmung der Anzahl ($s_i$) von Registerstellen zwischen der höherwertigen Registerstelle des Modulregisters mit dem ersten vorbestimmten Wert des transformierten Moduls ($N^T$) und der höchstwertigen Registerstelle des Multiplikations-Zwischenergebnis-Register (730), die den ersten vorbestimmten Wert hat, berechnet wird..

**11.** Prozessor nach Anspruch 10, der eine Host-CPU und einen Coprozessor aufweist, wobei die Einrichtung zum Transformieren (10) des Moduls in der Host-CPU angeordnet ist, und wobei die Einrichtung zum iterativen Abarbeiten (12) der modularen Multiplikation in dem Coprozessor angeordnet ist.

**12.** Prozessor nach Anspruch 11, bei dem die Host-CPU ein Kurzzahl-Rechenwerk mit einer Anzahl von Stellen kleiner oder gleich 64 aufweist, und bei dem der Coprozessor ein Langzahl-Rechenwerk mit einer Anzahl von Stellen größer oder gleich 512 aufweist.

**13.** Prozessor nach einem der Ansprüche 10 bis 12, bei dem das Modulregister ausgebildet ist, um den transformierten Modul, einen verschobenen transformierten Modul oder einen randomisierten transformierten Modul oder einen verschobenen randomisierten Modul zu speichern.

## Claims

**1.** A method of modular multiplication of a multiplicand (C) by a multiplier (M), in which a modulus (N) is employed, making use of a multiplication look-ahead process and a reduction look-ahead process, within a processor with a modulus register (720), a multiplication intermediate result register and an arithmetic unit (700) whose inputs are connected to the modulus register (720) and the multiplication intermediate result register (730), and wherein the output of the arithmetic unit (700) is fedback to the multiplication intermediate result register (730) and also connected to a control logic (760), said method comprising the steps of:

transforming (10) the modulus (N) into a transformed modulus ($N^T$) that is greater than the modulus (N), and storing the transformed modulus in the modulus Register (720), a predetermined fraction (2/3) of the transformed modulus having a higher-order register digit with a first predetermined value that is followed by at least one lower-order register digit having a second different predetermined value;

iterative working off (12) of the modular multiplication making use of the multiplication look-ahead process and the reduction look-ahead process and utilizing the transformed modulus ($N^T$) so as to obtain at the end of the iteration a transformed result for the modular multiplication; and

re-transforming (14) the transformed result by modular reduction of the transformed result utilizing the modulus (N),

wherein in the step of iterative working off (12) a plurality of iteration steps is performed, wherein in one iteration step a multiplication intermediate result is determined and stored in the multiplication intermediate result register (730), and wherein in the iteration step a reduction shift value ($s_N$) is determined and wherein the reduction shift value ($s_N$) is computed using a determination, performed by the control logic, of the number ($s_i$) of register digits between the higher-order register digits of the modulus register with the first predetermined value of the transformed modulus ($N^T$) and the highest-order register digits of the multiplication intermediate result register (730) having the first predetermined value.

2.  A method according to claim 1,
    wherein for the determination of the number ($s_i$) of the register digits a bit-wise XOR operation of the modulus register and the multiplication intermediate result register (730) is performed, wherein the number ($s_i$) is equal to the difference of the valence of the digit where the XOR operation outputs a first "1" and the valence at the digit where the XOR operation outputs a second "1".

3.  A method according to claim 2,
    wherein a multiplication shift value ($s_z$) is determined in said multiplication look-ahead process, and wherein a reduction shift value ($S_N$) for the reduction look-ahead process is calculated by subtraction of said predetermined number ($s_i$) of register digits from the multiplication shift value ($s_z$).

4.  A method according to any of the preceding claims,
    wherein said step of iterative working off comprises the following steps:

    in a first iteration step:

    (a) performing a multiplication look-ahead process to obtain a multiplication shift value ($s_z$);

    (b) multiplying a base raised to the power of the multiplication shift value by a current intermediate result (Z) to obtain a shifted intermediate result (Z');

    (c) performing a reduction look-ahead process to obtain a reduction shift value ($s_N$) by determining an auxiliary shift value ($s_i$) equal to the number of digits and by calculating the reduction shift value using the auxiliary shift value and the multiplication shift value ($s_z$);

    (d) multiplying the transformed modulus ($N^T$) by the base raised to the power of the reduction shift value to obtain a shifted transformed modulus ($N^T$); and

    (e) summing the intermediate result (Z') and the multiplicand (C) and subtracting the shifted transformed modulus ($N^T$) to obtain an updated intermediate result (Z).

5.  A method according to any of the preceding claims,
    wherein said predetermined fraction of the modulus is 2/3.

6.  A method according to claim 5,
    wherein the multiplicand (C), the multiplier (M) and the modulus (N) are binary, with the base being 2, and wherein the higher-order register digit of the predetermined fraction of the transformed modulus ($N^T$) has a first predetermined value of 1 and the at least one low-order digit has a second predetermined value of 0.

7.  A method according to claim 6,
    wherein the most significant bit of the transformed modulus is a sign bit, and a higher-order section of the predetermined fraction of the modulus reads as follows:

    01000 xx ... xx,

in which the bits designated xx may have arbitrary values.

**8.** A method according to claim 7,
wherein the higher-order section of the transformed modulus ($N^T$) reads as follows:

$$01100 ... 00.$$

**9.** A method according to any of claims 1 to 8,
wherein said step of transforming (10) the modulus comprises randomization of the modulus so that the transformed modulus is randomized.

**10.** A processor for modular multiplication of a multiplicand (C) by a multiplier (M), in which a modulus (N) is employed, making use of a multiplication look-ahead process and a reduction look-ahead process, wherein the processor comprises a modulus register (720), a multiplication intermediate result register (730) and an arithmetic unit (700) wherein the inputs of the arithmetic unit are connected to the modulus register (720) and the multiplication intermediate result register (730), and wherein the output of the arithmetic unit (700) is fedback to the multiplication intermediate result register (730) and also connected to a control logic (760), comprising:

a means for transforming (10) the modulus (N) into a transformed modulus ($N^T$) that is greater than the modulus (N), with a predetermined fraction of the transformed modulus having a higher-order register digit with a first predetermined value that is followed by at least one lower-order register digit having a second different predetermined value;

a means for iterative working off (12) of the modular multiplication making use of the multiplication look-ahead process and the reduction look-ahead process and utilizing the transformed modulus ($N^T$) so as to obtain at the end of the iteration a transformed result for the modular multiplication; and

a means for re-transforming (14) the transformed result by modular reduction of the transformed result utilizing the modulus (N),

wherein means for iterative working off (12) is implemented to perform a plurality of iteration steps, wherein in one iteration step a multiplication intermediate result is determined and stored in the multiplication intermediate result register (730), and
wherein in the iteration step a reduction shift value ($s_N$) is determined and wherein the reduction shift value ($s_N$) is calculated using a determination, performed by the control logic, of the number ($s_i$) of digits between the higher-order digits of the modulus register with the first predetermined value of the transformed modulus ($N^T$) and the highest-order digits of the multiplication intermediate result register (730) having the first predetermined value.

**11.** A processor according to claim 10,
comprising a host CPU and a coprocessor, said means for transforming (10) the modulus being arranged in the host CPU and said means for iterative working off (12) of the modular multiplication being arranged in the coprocessor.

**12.** A processor according to claim 11,
wherein the host CPU is a short-number arithmetic-logic unit having a number of digits smaller than or equal to 64, and wherein the coprocessor is a long-number arithmetic-logic unit having a number of digits greater than or equal to 512.

**13.** A processor according to any of claims 10 to 12,
wherein the modulus register is implemented in order to store the transformed modulus, a shifted transformed modulus or a randomised transformed modulus or a shifted randomised modulus.

**Revendications**

**1.** Procédé pour multiplier sous forme modulaire un multiplicande (C) par un multiplicateur (M), dans lequel,

- à l'aide d'un procédé pour prévoir la multiplication et d'un procédé pour prévoir la réduction, un module (N) est utilisé à l'intérieur d'un processeur comportant un registre modulaire (720), un registre destiné au résultat intermédiaire de multiplication (730) et une unité arithmétique (700) dont les entrées sont reliées au registre modulaire (720) et au registre destiné au résultat intermédiaire de multiplication (730) et

- la sortie de ladite unité arithmétique (700) est rétrocouplée audit registre destiné au résultat intermédiaire de multiplication (730) et est aussi reliée à une logique de commande (760)

comportant les étapes suivantes :

- le module (N) est transformé (10) en un module transformé ($N^T$) plus grand que le module (N), le module transformé est mémorisé dans le registre modulaire (720), une fraction prédéfinie (2/3) du module transformé ayant une position de registre plus élevée et munie d'une première valeur prédéfinie, cette position de registre étant suivie d'au moins une position de registre moins élevée, qui a une deuxième valeur prédéfinie différente,
- la multiplication modulaire est traitée itérativement (12) à l'aide du procédé pour prévoir la multiplication et du procédé pour prévoir la réduction en utilisant le module transformé ($N^T$) afin d'obtenir à la fin de l'itération un résultat transformé pour la multiplication modulaire et
- le résultat transformé subit une transformation inverse (14) en soumettant le résultat transformé à une réduction modulaire à l'aide du module (N), dans les conditions suivantes
- un grand nombre d'étapes d'itération est réalisé à l'étape de traitement itératif (12),
- un résultat intermédiaire de multiplication est établi à une étape d'itération et est mémorisé dans le registre destiné au résultat intermédiaire de multiplication (730) et
- une valeur de décalage pour la réduction ($s_N$) est établie à l'étape d'itération,
- la valeur de décalage pour la réduction ($s_N$) est calculée en utilisant une détermination effectuée par la logique de commande du nombre ($s_i$) des positions de registre entre la position plus élevée du registre modulaire ayant la première valeur du module transformé ($N^T$) d'une part et la position la plus élevée du registre destiné au résultat intermédiaire de multiplication (730), qui a la première valeur prédéfinie.

2. Procédé selon la revendication 1, dans lequel, pour déterminer le nombre ($s_i$) des positions de registre, on exécute bit par bit une disjonction exclusive du registre modulaire et du registre destiné au résultat intermédiaire de multiplication (730), le nombre ($s_i$) étant égal à la différence de valeur de la position sur laquelle la disjonction exclusive donne un premier " 1 " et de la valeur de la position sur laquelle la disjonction exclusive donne un deuxième " 1 ".

3. Procédé selon la revendication 2, dans lequel, au cours du procédé pour prévoir la multiplication, on établit une valeur de décalage pour la multiplication ($s_Z$) et on calcule une valeur de décalage pour la réduction ($s_N$) destinée au procédé pour prévoir la réduction en soustrayant le nombre ($s_i$) déterminé des positions de registre à la valeur de décalage pour la multiplication ($s_Z$).

4. Procédé selon l'une des revendications précédentes, dans lequel l'étape de traitement itératif comprend les étapes suivantes, dans une première étape d'itération :

(a) un procédé pour prévoir la multiplication est exécuté afin d'obtenir une valeur de décalage pour la multiplication ($s_Z$),
(b) une base élevée à une puissance à l'aide de la valeur de décalage pour la multiplication est multipliée par le résultat intermédiaire (Z) actuel afin d'obtenir un résultat intermédiaire (Z') décalé,
(c) un procédé pour prévoir la réduction est exécuté afin d'obtenir une valeur décalée de réduction ($s_N$) en déterminant une valeur décalée auxiliaire ($s_i$) qui est le nombre des positions de registre et en calculant la valeur décalée de réduction à l'aide de la valeur décalée auxiliaire et à l'aide de la valeur décalée de multiplication ($s_Z$),
(d) le module transformé ($N^T$) est multiplié par la base élevée à une puissance à l'aide de la valeur décalée de réduction afin d'obtenir un module transformé décalé ($N^{T'}$) et
(e) le résultat intermédiaire (Z') et le multiplicande (C) sont additionnés et le module transformé décalé ($N^{T'}$) est soustrait afin d'obtenir un résultat intermédiaire (Z) à jour.

5. Procédé selon l'une des revendications précédentes, dans lequel la fraction prédéfinie du module est 2/3.

6. Procédé selon la revendication 5, dans lequel

- le multiplicande (C), le multiplicateur (M) et le module (N) sont binaires,
- la base est 2 et
- la position de registre plus élevée de la fraction prédéfinie du module transformé ($N^T$) a une première valeur prédéfinie qui est 1 et l'au moins une position de registre moins élevée a une deuxième valeur prédéfinie qui est 0.

7. Procédé selon la revendication 6, dans lequel le bit maximal du module transformé est un bit à signe et une portion plus élevée de la fraction prédéfinie du module s'exprime de la manière suivante :

$$01000 \ xx \ ... \ xx,$$

les bits symbolisés par xx pouvant avoir des valeurs quelconques.

8. Procédé selon la revendication 7, dans lequel la portion plus élevée du module transformé ($N^T$) s'exprime de la manière suivante :

$$01100 \ ... \ 00.$$

9. Procédé selon l'une des revendications 1 à 8, dans lequel, à l'étape où le module est transformé (10), le module est arrangé au hasard de sorte que le module transformé est arrangé au hasard.

10. Processeur pour multiplier sous forme modulaire un multiplicande (C) par un multiplicateur (M), un module (N) étant utilisé à l'aide d'un procédé pour prévoir la multiplication et d'un procédé pour prévoir la réduction, le processeur comportant un registre modulaire (720), un registre destiné au résultat intermédiaire de multiplication (730) et une unité arithmétique (700), les entrées de ladite unité arithmétique sont reliées au registre modulaire (720) et au registre destiné au résultat intermédiaire de multiplication (730) et la sortie de ladite unité arithmétique (700) est rétrocouplée audit registre destiné au résultat intermédiaire de multiplication (730) et est aussi reliée à une logique de commande (760),
comportant les caractéristiques suivantes :

- un dispositif pour transformer (10) le module (N) en un module transformé ($N^T$), qui est plus grand que le module (N), et pour mémoriser le module transformé dans le registre modulaire, une fraction prédéfinie du module transformé ayant une position de registre plus élevée d'une première valeur prédéfinie, cette position de registre étant suivie d'au moins une position de registre moins élevée, qui a une deuxième valeur prédéfinie différente,
- un dispositif pour traiter itérativement (12) la multiplication modulaire à l'aide du procédé pour prévoir la multiplication et du procédé pour prévoir la réduction en utilisant le module transformé ($N^T$) afin d'obtenir à la fin de l'itération un résultat transformé pour la multiplication modulaire et
- un dispositif pour effectuer une transformation inverse (14) sur le résultat transformé en soumettant le résultat transformé à une réduction modulaire à l'aide du module (N),

dans les conditions suivantes

- dispositif de traitement itératif (12) est conçu pour réaliser un grand nombre d'étapes d'itération,
- un résultat intermédiaire de multiplication est établi à une étape d'itération et est mémorisé dans le registre destiné au résultat intermédiaire de multiplication (730) et
- une valeur de décalage pour la réduction ($s_N$) est établie à l'étape d'itération,
- la valeur de décalage pour la réduction ($s_N$) est calculée en utilisant une détermination effectuée par la logique de commande du nombre ($s_i$) des positions de registre entre la position plus élevée du registre modulaire ayant la première valeur du module transformé ($N^T$) d'une part et la position la plus élevée du registre destiné au résultat intermédiaire de multiplication (730), qui a la première valeur prédéfinie.

11. Processeur selon la revendication 10, équipé d'une unité centrale hôte et d'un coprocesseur, dans lequel

- dispositif destiné à transformer (10) le module se trouve dans l'unité centrale hôte et
- dispositif destiné à traiter itérativement (12) la multiplication modulaire se trouve dans le coprocesseur.

12. Processeur selon la revendication 11, dans lequel

- l'unité centrale hôte a une unité de calcul à nombres courts dont le nombre de positions est inférieur ou égal à 64 et

- le coprocesseur a une unité de calcul à nombres longs dont le nombre de positions est supérieur ou égal à 512.

13. Processeur selon l'une des revendications 10 à 12, dans lequel le registre modulaire est conçu pour mémoriser le module transformé, un module transformé décalé ou un module transformé arrangé au hasard ou un module décalé arrangé au hasard.

Transformieren des Moduls (N)

in einem transf. Modul ($N^T$) ⎯10

iteratives Abarbeiten der

modularen Multiplikation

unter Verwendung des

transf. Moduls ($N^T$) und

des vorbest. Bruchteil des

transformierten Moduls ⎯12

Rücktransformieren des

transformierten Ergebnisses

unter Verwendung des

Moduls (N) ⎯14

# FIG 1

L $(N_T) = m$    L $(N_R) = n - m$

n -1    n -1 -m    0

N    | 01XXX......X | XXXXXX                    XXXXXX | 000...0000 | 00...000 |

m -1    0

=: $N_T$    =: $N_R$

underflow
buffer

**FIG 2** (Modul)

n -m +p -1    n -1    0

$N^T$    | 01100...000 | YYYYY.........................YYYYYY | 000...0000 | 00...000 |

33    L($N^T$) = n -m +p

underflow
buffer

**FIG 3** (transformierter Modul)

n -m +p -1    n -1    0

$\frac{2}{3} N^T$    | 01̂00.....00 | ZZZZZ...........................ZZZZZZ | 000....000 | 000...000 |

44    L($\frac{2}{3}N^T$) = n -m +p

underflow
buffer

**FIG 4** ($\frac{2}{3}N^T$)

p -s -m bits    s bits    h bits

n -1    n +s -2 -m    n -1    0

N  | 01100...000 | XXXX...XXX | XXXXX....XXXXX | 000...000 | 000...0000 |

p -1 -m    s -1    0

underflow buffer

$L(N') = n - m + p$ bit

FIG 5 (transformierter Modul mit Randomisierung)

720    speichert $N^T$

710    730

| C |    | N |    | Z |

AU

700

FIG 6

FIG 7 (Stand der Technik)

FIG 8A

FIG 8B

FIG 8C

START — 900

M, C, N

Z := 0

LA := 0

m := L(M)

n := 0

910 — GEN_Mult_LA
(a, sz)

930 — GEN_Mult_LA
(a, sN)

920 — SHL Z, sz

940 — SHL N, sN

Z'

N'

950 — Z :=
Z' +a ·c +b ·N'

m=0 AND n=0 ?   NEIN

JA

Z < 0 ?   NEIN

JA

Z := Z +N

Z

960 — STOPP

FIG 9 (Stand der Technik)

START

b, sN —— 1000

sN := 0 —— 1010

$ZDN := \frac{2}{3} \cdot N$ —— 1020

1030 —

n=0 AND $s_N$= -k     JA     NEIN

n := n -1 —— 1040

sN := sN -1 —— 1060

ZDN := ZDN/2 —— 1080

Abs(Z) > ZDN ? —— 1100     NEIN

JA

1140 — b := 0

b :=
2 ·Z[SIGN] -1 —— 1120

n := n +sz —— 1160

sN := sN + sz —— 1180

n > MAX -k ? —— 1200
JA                    NEIN

1240 — cur_k :=
MAX -k +1

cur_k := k —— 1220

STOPP

FIG 10 (Stand der Technik)